# EUROPÄISCHE PATENTANMELDUNG

(11) **EP 3 632 735 A2**
(43) Veröffentlichungstag der Anmeldung: **08.04.2020**
(21) Anmeldenummer: 19200759.9
(22) Anmeldetag: 01.10.2019
(51) Int. Cl.: B60L 53/31

(54) **LADESTATION FÜR ELEKTROFAHRZEUGE**

(30) Priorität: 05.10.2018 DE 102018124642
(71) Anmelder: Elektro-Bauelemente GmbH, 44536 Lünen (DE)
(72) Erfinder: Kachouh, Checrallah, 44227 Dortmund (DE)
(74) Vertreter: Wickord, Wiro

(57) **Zusammenfassung**

Die Erfindung betrifft eine Ladestation für elektrisch betreibbare Fahrzeuge umfassend ein Stationsgehäuse mit einer Gehäusewandung und ein von dem Stationsgehäuse umgriffenes Sicherheitsmessmodul mit einem Sicherheitsgehäuse, wobei dem Sicherheitsmessmodul ein Zähler zugeordnet ist, welcher der Erfassung einer von der Ladestation bereitgestellten Energiemenge dient, und wobei das Sicherheitsmessmodul des Weiteren eine Anzeigeeinheit und eine Bedieneinheit vorsieht, welche wenigstens ein Eingabemittel aufweist und welche ausgebildet ist zur Entgegennahme manueller Bedienbefehle von einem Benutzer, dass die Bedieneinheit des Sicherheitsmessmoduls außerhalb des Sicherheitsgehäuses und innerhalb des Stationsgehäuses vorgesehen ist und dass die Bedieneinheit an dem Sicherheitsgehäuse gehalten ist. Ferner betrifft die Erfindung ein Sicherheitsmessmodul für eine Ladestation.

## Beschreibung

Die Erfindung betrifft eine Ladestation für elektrisch betreibbare Fahrzeuge umfassend ein Stationsgehäuse mit einer Gehäusewandung und ein von dem Stationsgehäuse umgriffenes Sicherheitsmessmodul mit einem Sicherheitsgehäuse, wobei dem Sicherheitsmessmodul ein Zähler zugeordnet ist, welcher der Erfassung einer von der Ladestation bereitgestellten Energiemenge dient, und wobei das Sicherheitsmessmodul des Weiteren eine Anzeigeeinheit vorsieht. Ferner betrifft die Erfindung ein Sicherheitsmessmodul für eine Ladestation.

Aus der DE 20 2017 101 677 U1 ist eine Ladestation mit einem Sicherheitsmessmodul bekannt, welches ausgebildet ist zur eichrechtskonformen Erfassung an einer Ladestation bereitgestellten Energiemenge. Das Sicherheitsmessmodul sieht einen Zähler vor, welcher in einem separaten Modulgehäuse verbaut ist. Eine Interaktion mit dem Zähler erfolgt allein datentechnisch über rückwirkungsfrei geschaltete Schnittstellen. Einer Manipulation des Zählers ist insofern entgegengewirkt. Das Sicherheitsmessmodul umfasst darüber hinaus eine Anzeigeeinheit, über die insbesondere ein Zählerstand einem externen Nutzer angezeigt werden kann. Eingabemittel zur mechanischen Bedienung durch den Nutzer sieht das Sicherheitsmessmodul nicht vor.

Aufgabe der vorliegenden Erfindung ist es, unter Beibehaltung der manipulationssicheren Gestaltung des Sicherheitsmessmoduls Eingabemittel vorzusehen, welche es beispielsweise erlauben, die Anzeigeeinheit zu aktivieren oder nachträglich und auf Initiative des Nutzers in einem Datenspeicher des Sicherheitsmessmoduls gespeicherte Zählerstande anzuzeigen.

Zur Lösung der Aufgabe ist die Erfindung in Verbindung mit dem Oberbegriff des Patentanspruchs 1 dadurch gekennzeichnet, dass das Sicherheitsmessmodul eine Bedieneinheit vorsieht, welche wenigstens ein Eingabemittel aufweist und welche ausgebildet ist zur Entgegennahme manueller Bedienbefehle von einem Benutzer, dass die Bedieneinheit des Sicherheitsmessmoduls außerhalb des Sicherheitsgehäuses und innerhalb des Stationsgehäuses vorgesehen ist und dass die Bedieneinheit an dem Sicherheitsgehäuse gehalten ist.

Der besondere Vorteil der Erfindung besteht darin, dass das Sicherheitsmessmodul eine Bedieneinheit mit wenigstens einem Eingabemittel aufweist und der Nutzer unmittelbar vor Ort mit dem Sicherheitsmessmodul interagieren kann. Die Bedieneinheit mit dem Eingabemittel ist wie der Zähler vollständig vom Stationsgehäuse umschlossen und somit unzugänglich und manipulationsgeschützt in dem Stationsgehäuse der Ladestation vorgesehen. Als Eingabemittel können beispielsweise ein Näherungssensor und/oder ein kapazitiver Sensor dienen, welcher durch das Stationsgehäuse hindurch von außen manuell bedient werden kann. Der Nutzer hat insofern die Möglichkeit zu interagieren, ohne unmittelbar Zugang zu dem Sicherheitsmessmodul zu erlangen. Beispielsweise kann der Nutzer die Anzeigeeinheit des Sicherheitsmessmoduls aktivieren oder sich Zählerwerte anzeigen lassen, die in einem Datenspeicher des Sicherheitsmessmoduls gespeichert sind.

Der Zähler der Ladestation kann als separater Zähler ausgebildet sein. Alternativ kann der Zähler als Teil des Sicherheitsmessmoduls realisiert und von dem Sicherheitsgehäuse des Sicherheitsmessmoduls umgriffen sein.

Nach einer bevorzugten Ausführungsform der Erfindung ist die Bedieneinheit an dem Sicherheitsgehäuse längsverschiebbar gehalten. Hierdurch gelingt immanent ein Toleranzausgleich. Insbesondere können Fertigungs- und Montagetoleranzen in Bezug auf die Herstellung des Stationsgehäuses sowie den Einbau des Sicherheitsmessmoduls ausgeglichen werden.

Die Längsverschiebbarkeit der Bedieneinheit kann insbesondere über ein Führungsmittel realisiert sein. Als Führungsmittel kann beispielsweise eine Linearführung vorgesehen werden. Beispielsweise kann als Führungsmittel ein Führungsstab dienen.

Nach einer Weiterbildung der Erfindung ergibt sich durch das Vorsehen eines Gelenks, über das die Bedieneinheit schwenkbar an dem Sicherheitsgehäuse halten ist, ein weiter verbesserter Toleranzausgleich. Die Bedieneinheit kann nicht nur in Bezug auf die Längsverschiebbarkeit eingestellt beziehungsweise justiert werden. Auch die Neigung der Bedieneinheit kann entsprechend angepasst beziehungsweise ausgeglichen werden.

Beispielsweise kann ein Kugelkopfgelenk vorgesehen sein zum schwenkbaren Festlegen der Bedieneinheit an dem Sicherheitsgehäuse. Vorteilhaft kann durch das Vorsehen des Kugelkopfgelenks die Bedieneinheit flexibel und individuell in zwei zu einander orthogonale Richtungen geschwenkt beziehungsweise gekippt werden.

Nach einer Weiterbildung der Erfindung ist die Bedieneinheit des Sicherheitsmessmoduls in einer Verwendungsstellung von innen an die Gehäusewandung des Stationsgehäuses so angelegt, dass das Eingabemittel innenseitig flächig an der Gehäusewandung anliegt. Vorteilhaft kann hierdurch eine sichere und zuverlässige Bedienung insbesondere bei der Verwendung eines kapazitiven Sensors als Eingabemittel sichergestellt werden. Die flächige Anlage des Eingabemittels gewährleistet insofern, dass ein berührender Kontakt des Nutzers mit dem Stationsgehäuse zuverlässig erkannt wird.

Nach einer Weiterbildung der Erfindung ist außenseitig an der Gehäusewandung den Eingabemitteln der Bedieneinheit des Sicherheitsmessmoduls gegenüberliegend eine optische Markierung und/oder ein Konturübergang realisiert. Die optische Markierung beziehungsweise der Konturübergang dienen zur optischen Kennzeichnung beziehungsweise haptischen Markierung der Stelle, an der sich innenseitig das mechanisch nicht zugängliche Eingabemittel befindet. Die Kennzeichnung beziehungsweise Markierung an der Bedienstelle ist insofern von dem funktionalen Eingabemittel getrennt außenseitig an dem Stationsgehäuse realisiert.

Nach einer Weiterbildung der Erfindung ist zwischen der Bedieneinheit des Sicherheitsmessmoduls einerseits und dem Sicherheitsgehäuse eine Feder und bevorzugt eine Druckfeder vorgesehen. Die Feder ist der Bedieneinheit und dem Sicherheitsgehäuse derart zugeordnet, dass die Bedieneinheit mittels der Federkraft von dem Sicherheitsgehäuse weggedrückt wird. Insbesondere kann insofern vorgesehen sein, dass die Bedieneinheit von der Feder gegen eine Innenseite der Gehäusewandung angedrückt wird.

Als Feder kann beispielsweise eine klassische Spiralfeder vorgesehen werden, welche den Führungsstab umgreift. Beispielsweise kann eine Kunststofffeder vorgesehen sein oder ein elastisches und insofern federndes Bauteil. Beispielsweise kann ein Schaum oder ein schwammförmiges Bauteil die Federfunktion übernehmen.

Nach einer Weiterbildung der Erfindung ist das Stationsgehäuse mehrteilig ausgebildet. Insbesondere können ein Gehäusegrundkörper mit einer Ausnehmung sowie ein der Ausnehmung zugeordneter Gehäuseverschlusskörper vorgesehen sein. Der Gehäuseverschlusskörper ist der Ausnehmung derart zugeordnet und an dem Gehäusegrundkörper derart beweglich befestigt, dass der Gehäuseverschlusskörper die Ausnehmung in einer Öffnungsstellung freigibt und in einer Schließstellung überdeckt. Die Bedieneinheit ist dann von innen an die Gehäusewandung angelegt, die als Teil des Gehäuseverschlusskörpers realisiert ist. Vorteilhaft kann hierdurch über den Toleranzausgleich hinaus sichergestellt werden, dass die Bedieneinheit des Sicherheitsmessmoduls mit dem Eingabemittel den beispielsweise schwenkbaren Gehäuseverschlusskörper zugeordnet werden kann. Die Bedieneinheit kann also beispielsweise an einer Vorderseite der Ladestation vorgesehen werden, wenn die Vorderseite klappen- beziehungsweise türartig ausgebildet ist. In der Schließstellung ist dabei eine flächige Anlage des Bedienelements an der Gehäusewandung sichergestellt.

Zur Lösung der Aufgabe weist die Erfindung die Merkmale des Patentanspruchs 12 auf. Es ist insofern vorgesehen, dass das Sicherheitsmessmodul ein Sicherheitsgehäuse und eine Anzeigeeinheit zur Wiedergabe eines von einem Zähler bestimmten Messwerts umfasst. Ferner ist eine Bedieneinheit vorgesehen, wobei die Bedieneinheit wenigstens ein Eingabemittel vorsieht und ausgebildet ist zur Entgegennahme manueller Bedienbefehle von einem Benutzer. Die Bedieneinheit des Sicherheitsmessmoduls ist außerhalb des Sicherheitsgehäuses vorgesehen und längsverschiebbar und/oder verschwenkbar an dem Modulgehäuse Sicherheitsgehäuse gehalten.

Beispielsweise kann hierbei ein kapazitiver Sensor als Eingabemittel vorgesehen sein.

Beispielsweise kann ein Führungsmittel und insbesondere eine Linearführung beziehungsweise ein Führungsstab vorgesehen sein zum längsverschiebbaren Halten der Bedieneinheit an dem Sicherheitsgehäuse.

Zum schwenkbaren Festlegen der Bedieneinheit an dem Sicherheitsgehäuse kann ein Gelenk und bevorzugt ein Kugelkopfgelenk vorgesehen werden.

Zusätzlich kann eine Feder vorgesehen sein, welche zwischen dem Sicherheitsgehäuse und der Bedieneinheit derart angeordnet ist, dass die Bedieneinheit durch die Federkraft der Feder von dem Sicherheitsgehäuse weggedrückt wird.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Ladestation gelten selbstverständlich auch im Zusammenhang mit dem erfindungsgemäßen Sicherheitsmessmodul und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine erfindungsgemäße Ladestation für elektrisch betreibbare Fahrzeuge mit einem erfindungsgemäßen Sicherheitsmessmodul in einer Frontseitenansicht,
- Fig. 2: eine vergrößerte Darstellung des Details X der erfindungsgemäßen Ladestation nach Fig. 1,
- Fig. 3: eine erste perspektivische Ansicht des erfindungsgemäßen Sicherheitsmessmoduls mit einer Bedieneinheit in einer ersten Endstellung,
- Fig. 4: das Sicherheitsmessmodul nach Fig. 3 mit der Bedieneinheit in einer zweiten Endstellung,
- Fig. 5: eine erste Prinzipdarstellung einer Einbausituation des erfindungsgemäßen Sicherheitsmessmoduls,
- Fig. 6: eine zweite Prinzipdarstellung der Einbausituation des erfindungsgemäßen Sicherheitsmessmoduls und
- Fig. 7: eine dritte Prinzipdarstellung der Einbausituation des erfindungsgemäßen Sicherheitsmessmoduls.

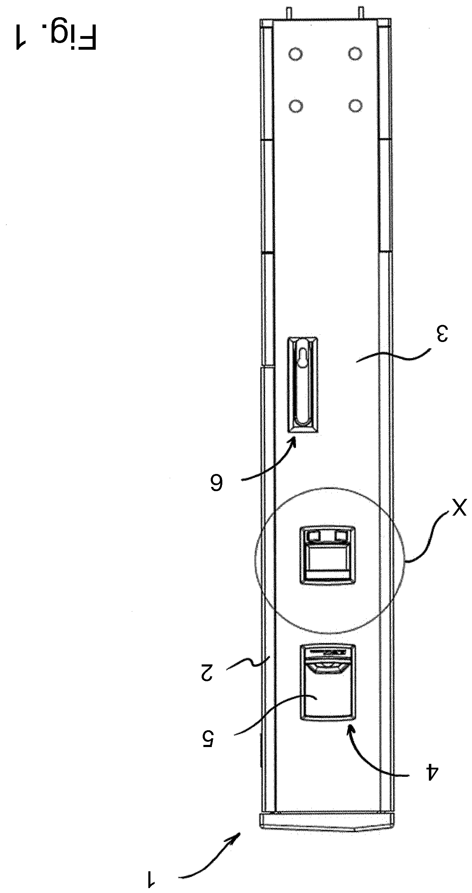

Eine erfindungsgemäße Ladestation für elektrisch betreibbare Fahrzeuge nach Fig. 1 sieht ein Stationsgehäuse 1 mit einem Gehäusegrundkörper 2 und einem Gehäuseverschlusskörper 3 vor. Der Gehäuseverschlusskörper 3 überdeckt in der dargestellten Schließstellung eine an dem Gehäusegrundkörper 2 vorgesehene Ausnehmung. In einer Öffnungsstellung, in der der Gehäuseverschlusskörper 3 zur Seite geschwenkt ist, ist diese Ausnehmung freigegeben. Insbesondere ist es dem autorisiertem Wartungspersonal möglich, in der Öffnungsstellung Zugang zu erhalten zu den Funktionskomponenten der Ladestation, welche sich in dem Stationsgehäuse 1 befinden.

An dem Gehäuseverschlusskörper 3 ist zum einen eine Anschlusseinheit 4 für ein Ladekabel vorgesehen. Die Anschlusseinheit 4 umfasst einen verschiebbaren Verschlusskörper 5. Hinter dem verschiebbaren Verschlusskörper 5 ist vorliegend ein elektrisch kontaktiertes Anschlusselement für das Ladekabel vorgesehen. Weiter ist an dem Gehäuseverschlusskörper 3 eine Griff- und Verschlusseinheit 6 vorgesehen. Die Griff- und Verschlusseinheit dient der Betätigung und Verriegelung des Gehäuseverschlusskörpers 3 in der dargestellten Schließstellung.

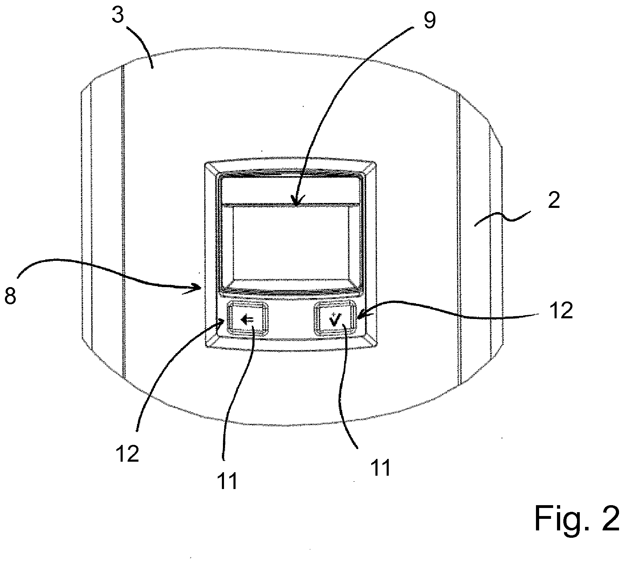

Ferner definiert der Gehäuseverschlusskörper 3 eine Bedien- und Sichtschnittstelle zu einem Sicherheitsmessmodul 7 der Ladestation. An dem Gehäuseverschlusskörper 3 ist hierzu, wie in Fig. 2 dargestellt, eine Schnittstelleneinheit 8 vorgesehen. Die Schnittstelleneinheit 8 sieht zum einen eine Ausnehmung 9 vor, durch die hindurch eine Anzeigeeinheit 10 des Sicherheitsmessmoduls 7 betrachtet werden kann. Zudem sind an der Schnittstelleneinheit 8 zwei optische Markierungen 11 mit Konturübergängen 12 vorgesehen, welche einer im Folgenden näher betrachteten Bedieneinheit 13 des Sicherheitsmessmoduls 7 zugeordnet sind.

Die Schnittstelleneinheit 8 ist vorliegend aus einem Kunststoff gefertigt. Sie umgreift die Anzeigeeinheit 10 des Sicherheitsmessmoduls 7 rahmenförmig und ist als Teil einer Gehäusewandung 22 des Gehäuseverschlusskörpers 3 realisiert.

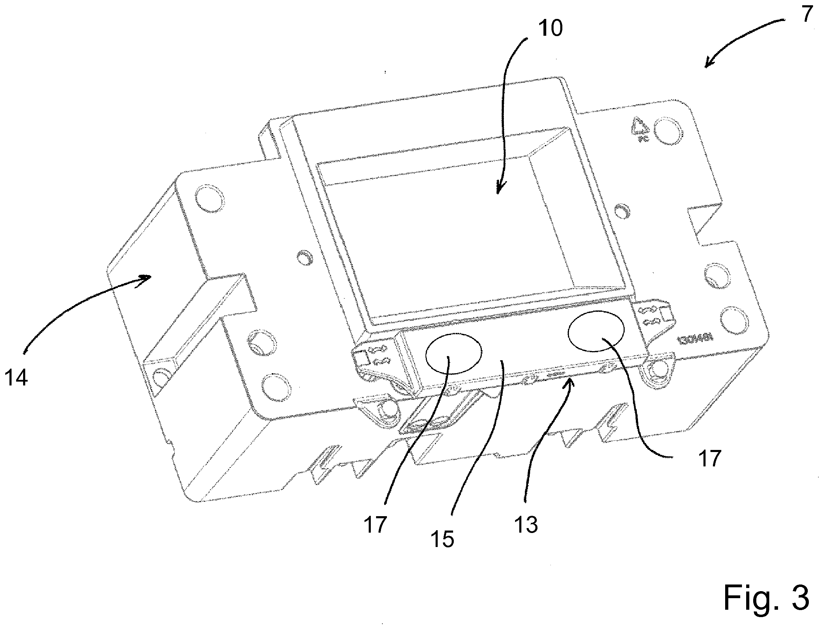

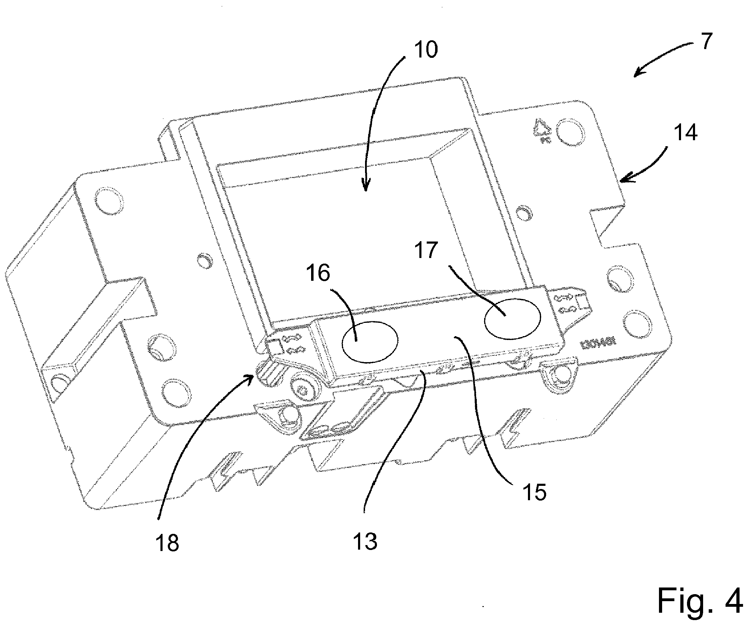

Das Sicherheitsmessmodul 7 ist im Detail in den Fig. 3 und 4 dargestellt. Ihm ist ein nicht dargestellter Zähler zugeordnet, welcher ausgebildet ist zur Erfassung einer von der Ladestation bereitgestellten Energiemenge. Beispielsweise kann ein Stromzähler beziehungsweise ein Energiemengenzähler vorgesehen sein. Der Zähler ist an ein Sicherheitsgehäuse 14 des Sicherheitsmessmoduls 7 angeflanscht und im Inneren des Stationsgehäuses 1 angeordnet. Eine datentechnische Kopplung des Zählers mit dem Sicherheitsmessmodul 7 kann beispielsweise über eine optische Schnittstelle realisiert sein. Ein Zählerstand des Zählers kann von der Anzeigeeinheit 10 des Sicherheitsmessmoduls 7 angezeigt werden.

An dem Sicherheitsgehäuse 14 des Sicherheitsmessmoduls 7 ist zusätzlich die Bedieneinheit 13 gehalten. Die Bedieneinheit 13 weist im Bereich einer dem Sicherheitsgehäuse 14 abgewandten Frontseite 15 zwei separate Eingabeelemente 16, 17 auf. Als Eingabeelement 16, 17 dienen vorliegend zwei kapazitive Sensoren.

Die Bedieneinheit 13 ist elektrisch über einen Anschlussleiter 23 kontaktiert.

Die Bedieneinheit 13 ist bezogen auf das Sicherheitsgehäuse 14 längsverschiebbar zwischen einer ersten Endposition (Fig. 3) und einer zweiten Endposition (Fig. 4) gehalten. Hierzu sind zwei zueinander beabstandete Führungsstäbe 18 als Linearführungen beziehungsweise Führungsmittel für die Bedieneinheit 13 vorgesehen. Die Führungsstäbe 18 sind mit der Bedieneinheit 13 verbunden und in einer Ausnehmung 19 des Sicherheitsgehäuses 14 des Sicherheitsmessmoduls 7 aufgenommen.

Zusätzlich ist die Bedieneinheit 13 verschwenkbar an dem Sicherheitsgehäuse 14 festgelegt. Zur Realisierung der schwenkbaren Festlegung sind zwei Kugelkopfgelenke 20 vorgesehen. Die Kugelkopfgelenke 20 befinden sich hierbei zwischen der Bedieneinheit 13 und den Führungsstäben 18. Durch die Kugelkopfgelenke 20 ist es im Zusammenwirken mit den Linearführungen 18 möglich, die Neigung der Bedieneinheit 13 relativ zu dem Sicherheitsgehäuse 14 des Sicherheitsmessmoduls 7 unabhängig in zwei orthogonale Richtungen einzustellen.

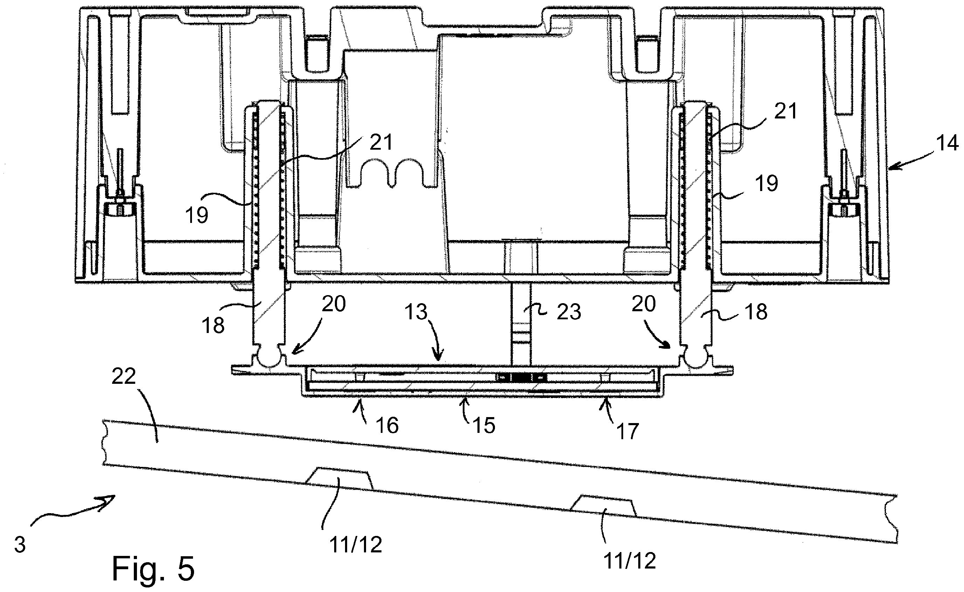

Die Einbausituation für das Sicherheitsmessmodul 7 in dem Stationsgehäuse 1 der Ladestation ist in den Fig. 5 bis 7 dargestellt.

In Fig. 5 ist zunächst das in dem nicht dargestellten Gehäusegrundkörper 2 verbaute beziehungsweise ortsfest montierte Sicherheitsmessmodul 7 dargestellt. Die Bedieneinheit 13 des Sicherheitsmessmoduls 7 befindet sich beabstandet zu dem Sicherheitsgehäuse 14 in der zweiten Endposition. Die dargestellte Abstandsposition wird erreicht, indem zwischen dem Sicherheitsgehäuse 14 und der Bedieneinheit 13 eine Druckfeder vorgesehen ist, welche die Bedieneinheit 13 von dem Sicherheitsgehäuse 14 wegdrückt. Die Feder 21 ist dabei in den Ausnehmungen 19 angeordnet. Sie umgreift die Führungsstäbe 18 des Sicherheitsmessmoduls 7.

Zusätzlich ist dargestellt, dass der Gehäuseverschlusskörper 3 zum Teil aufgeschwenkt angeordnet und von der Bedieneinheit 13 beabstandet vorgesehen ist. Die nicht einzeln dargestellte, an dem Gehäusegrundkörper 2 gebildete Ausnehmung ist insofern jedenfalls teilweise freigegeben.

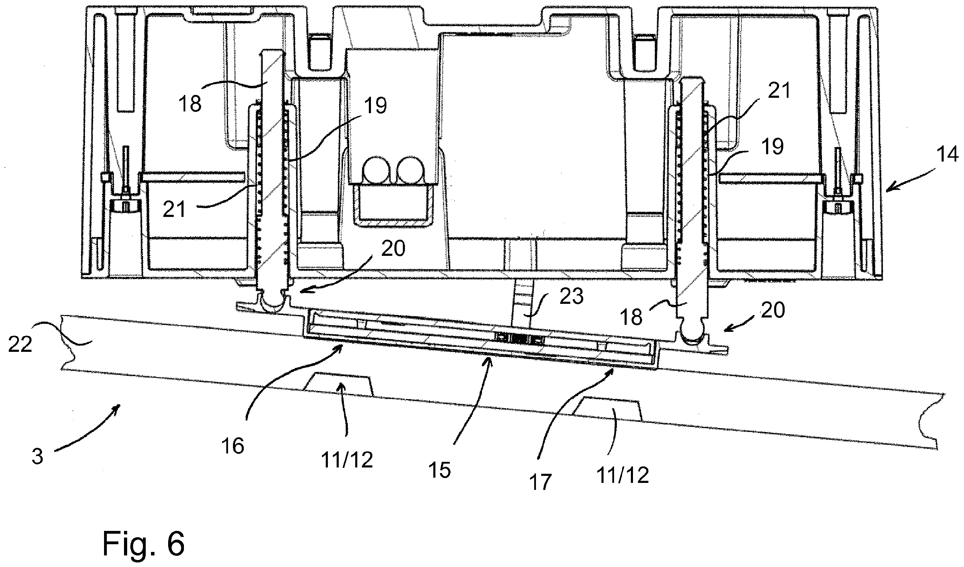

Fig. 6 zeigt die Zuordnung der Bedieneinheit 13 zu der Gehäusewandung 22 des Gehäuseverschlusskörpers 3 beim Schließen der Ausnehmung. Die Bedieneinheit 13 ist insofern verschwenkt beziehungsweise geneigt zu dem Sicherheitsgehäuse 14 vorgesehen. Die Neigung der Bedieneinheit 13, welche sich beim Verschließen der Ausnehmung beziehungsweise dem Verschwenken des Gehäuseverschlusskörpers 3 in Richtung des Gehäusegrundkörpers 2 von innen an die Gehäusewandung 22 anlegt, bestimmt sich durch die Neigung der Gehäusewandung 22.

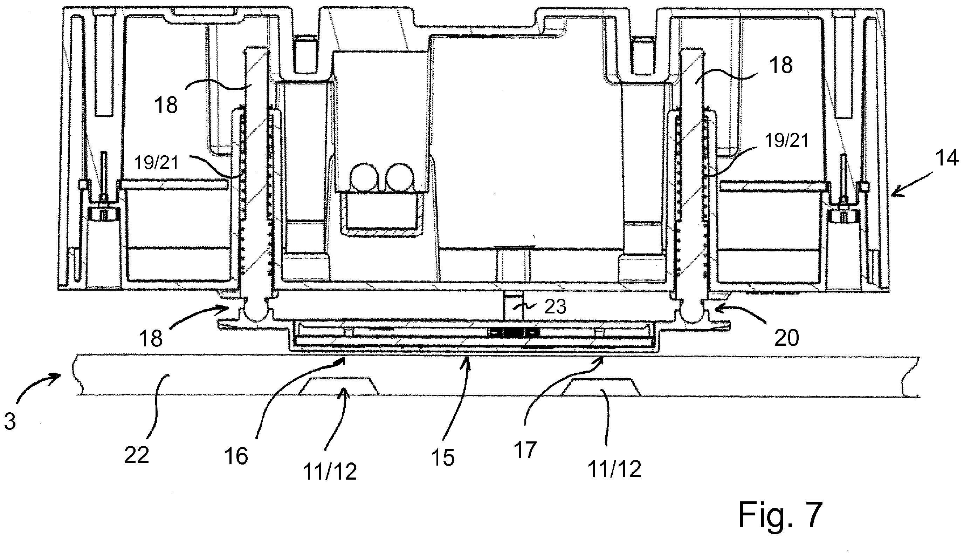

In einer Verwendungsstellung der erfindungsgemäßen Ladestation nach Fig. 7 verschließt der Gehäuseverschlusskörper 3 die nicht dargestellte Ausnehmung des Gehäusegrundkörpers 2 vollständig. Die Bedieneinheit 13 ist mit der Frontseite 15 derselben von innen flächig an die Gehäusewandung 22 des Gehäuseverschlusskörpers 3 angelegt. Dabei sind die Eingabeelemente 16, 17, welche an der Frontseite 15 der Bedieneinheit 13 gebildet sind, gegenüberliegend von den an der Außenseite der Gehäusewandung 22 vorgesehenen optischen Markierungen 11 beziehungsweise Konturübergängen 12 positioniert.

Nach einer alternativen, nicht dargestellten Ausführungsform der Erfindung kann die Bedieneinheit 13 des Sicherheitsmessmoduls 7 von innen an eine Gehäusewandung des Gehäusegrundkörpers 2 angelegt sein. Die Erfindung ist insofern nicht beschränkt auf Ausführungsformen, in denen die Bedieneinheit 13 des Sicherheitsmessmoduls 7 dem verschwenkbaren Gehäuseverschlusskörper 3 zugeordnet ist.

Nach einer alternativen, nicht dargestellten Ausführungsform der Erfindung kann der Zähler als Teil des Sicherheitsmessmoduls 7 realisiert sein und insbesondere von dem Sicherheitsgehäuse 14 des Sicherheitsmessmoduls 7 umgriffen sein.

Als elektrisch betreibbare Fahrzeuge im Sinne der Erfindung gelten alle Automobile (PKW, LKW, Wohnmobile, Zweiräder, Busse, Transporter usw.), Schienenfahrzeuge (insbesondere Lokomotiven), Wasserfahrzeuge (Schiffe), Luftfahrzeuge sowie Anhänger (Wohnanhänger), mobile Verkaufsstände usw. Das Ladegerät kann ebenso verwendet werden zum Bereitstellen von elektrischer Energie für Fahrzeuge ohne Energiespeicher.

## Patentansprüche

1. Ladestation für elektrisch betreibbare Fahrzeuge umfassend ein Stationsgehäuse (1) mit einer Gehäusewandung (22) und ein von dem Stationsgehäuse (1) umgriffenes Sicherheitsmessmodul (7) mit einem Sicherheitsgehäuse (14), wobei dem Sicherheitsmessmodul (7) ein Zähler zugeordnet ist, welcher der Erfassung einer von der Ladestation bereitgestellten Energiemenge dient, und wobei das Sicherheitsmessmodul (7) des Weiteren eine Anzeigeeinheit (10) vorsieht, **dadurch gekennzeichnet, dass** das Sicherheitsmessmodul (7) eine Bedieneinheit (13) vorsieht, welche wenigstens ein Eingabemittel (16, 17) aufweist und welche ausgebildet ist zur Entgegennahme manueller Bedienbefehle von einem Benutzer, dass die Bedieneinheit (13) des Sicherheitsmessmoduls (7) außerhalb des Sicherheitsgehäuses (14) und innerhalb des Stationsgehäuses (1) vorgesehen ist und dass die Bedieneinheit (13) an dem Sicherheitsgehäuse (14) gehalten ist.

2. Ladestation nach Anspruch 1, **dadurch gekennzeichnet, dass** die Bedieneinheit (13) des Sicherheitsmessmoduls (7) in einer Verwendungsstellung von innen an die Gehäusewandung (22) des Stationsgehäuses (1) angelegt ist derart, dass das Eingabemittel (16, 17) innenseitig flächig an der Gehäusewandung (22) anliegt.

3. Ladestation nach Anspruch 1 oder 2, **dadurch gekennzeichnet, dass** das Eingabemittel (16, 17) ein kapazitiver Sensor ist.

4. Ladestation nach einem der Ansprüche 1 bis 3, **dadurch gekennzeichnet, dass** die Bedieneinheit (13) längsverschiebbar an dem Sicherheitsgehäuse (14) gehalten ist und dass das Sicherheitsmessmodul (7) ein Führungsmittel vorsieht für die längsverschiebbar gehaltene Bedieneinheit (13).

5. Ladestation nach Anspruch 4, **dadurch gekennzeichnet, dass** das Führungsmittel als eine Linearführung ausgebildet ist.

6. Ladestation nach Anspruch 4 oder 5, **dadurch gekennzeichnet, dass** als Führungsmittel ein Führungsstab (18) vorgesehen ist.

7. Ladestation nach einem der Ansprüche 1 bis 6, **dadurch gekennzeichnet, dass** die Bedieneinheit (13) federbelastet vorgesehen ist derart, dass die Bedieneinheit (13) mittels der Federkraft von dem Sicherheitsgehäuse (14) weggedrückt wird.

8. Ladestation nach einem der Ansprüche 1 bis 7, **dadurch gekennzeichnet, dass** die Bedieneinheit (13) über ein Gelenk des Sicherheitsmessmoduls (7) verschwenkbar an dem Sicherheitsgehäuse (14) gehalten ist.

9. Ladestation nach Anspruch 8, **dadurch gekennzeichnet, dass** als Gelenk ein Kugelkopfgelenk (20) vorgesehen ist.

10. Ladestation nach einem der Ansprüche 2 bis 9, **dadurch gekennzeichnet, dass** das Stationsgehäuse (1) mehrteilig ausgebildet ist und einen Gehäusegrundkörper (2) mit einer Ausnehmung sowie einen der Ausnehmung zugeordneten Gehäuseverschlusskörper (3) vorsieht, wobei der Gehäuseverschlusskörper (3) der Ausnehmung derart zugeordnet und an dem Gehäusegrundkörper (2) derart befestigt ist, dass der Gehäuseverschlusskörper (3) die Ausnehmung in einer Öffnungsstellung freigibt und in einer Schließstellung überdeckt, und dass die Gehäusewandung (22), an die die Bedieneinheit (13) von innen angelegt ist, als Teil des Gehäuseverschlusskörpers (3) realisiert ist.

11. Ladestation nach einem der Ansprüche 1 bis 10, **dadurch gekennzeichnet, dass** außenseitig an der Gehäusewandung (22) dem Eingabemittel (16, 17) der Bedieneinheit (13) des Sicherheitsmessmoduls (7) gegenüberliegend eine optische Markierung (11) und/oder ein Konturübergang (12) realisiert ist.

12. Ladestation nach einem der Ansprüche 3 bis 11, **dadurch gekennzeichnet, dass** die optische Markierung (11) und/oder der Konturübergang (12) als Teil einer aus Kunststoff gefertigten Schnittstelleneinheit (8) realisiert sind.

13. Sicherheitsmessmodul (7) für eine Ladestation, insbesondere eine Ladestation nach einem der Ansprüche 1 bis 12, umfassend ein Sicherheitsgehäuse (14) und eine Anzeigeeinheit (10) zur Wiedergabe eines von einem Zähler bestimmten Messwerts, **dadurch gekennzeichnet, dass** eine Bedieneinheit (13) vorgesehen ist, wobei die Bedieneinheit (13) wenigstens ein Eingabemittel (16, 17) vorsieht, welches ausgebildet ist zur Entgegennahme manueller Bedienbefehle von einem Benutzer, und dass die Bedieneinheit (13) außerhalb des Sicherheitsgehäuses (14) vorgesehen ist und verschiebbar und/oder verschwenkbar an dem Sicherheitsgehäuse (14) gehalten ist.

14. Sicherheitsmessmodul (7) nach Anspruch 13, **dadurch gekennzeichnet, dass** als Eingabemittel (16, 17) ein kapazitiver Sensor vorgesehen ist.

15. Sicherheitsmessmodul (7) nach Anspruch 13 oder 14, **dadurch gekennzeichnet, dass** ein Führungsmittel zum längsverschiebbaren Halten der Bedieneinheit (13) und/oder ein Gelenk zum schwenkbaren Festlegen der Bedieneinheit (13) an dem Sicherheitsgehäuse (14) und/oder eine Feder (21) vorgesehen sind, wobei die Feder (21) dem Sicherheitsgehäuse (14) und der Bedieneinheit (13) derart zugeordnet ist, dass die Bedieneinheit (13) durch die Federkraft von dem Sicherheitsgehäuse (14) weggedrückt wird.
